# EUROPEAN PATENT SPECIFICATION

(11) **EP 0 592 099 B1**
(45) Date of publication and mention of the grant of the patent: **10.12.1997**
(21) Application number: 93306878.5
(22) Date of filing: 31.08.1993
(51) Int. Cl.: H04N 7/14

(54) **Computer workstation**
Computerarbeitsstation
Station de travail d'ordinateur

(30) Priority: 03.10.1992 GB 9220832
(43) Date of publication of application: 13.04.1994
(73) Proprietor: International Business Machines Corporation, Armonk, N.Y. 10504 (US)
(72) Inventor: Wilson, David Andrew Graham, Winchester, Hampshire SO22 6JU (GB)
(74) Representative: Burt, Roger James, Dr.

(56) References cited:
- DR. DOBB'S JOURNAL vol. 17, no. 7 , July 1992 , USA pages 16 - 24 J.L. GREEN 'CAPTURING DIGITAL VIDEO USING DVI'
- COMMUNICATIONS OF THE ASSOCIATION FOR COMPUTING MACHINERY vol. 35, no. 1 , January 1992 , NEW YORK US pages 53 - 67 XP329173 J.L. GREEN 'THE EVOLUTION OF DVI SYSTEM SOFTWARE'
- NETWORKING MANAGEMENT vol. 8, no. 12 , December 1990 , USA pages 28 - 36 E.M. GOLD 'UNIFIED SYSTEMS INTEGRATE VOICE, DATA AND IMAGES'
- PERSONAL COMPUTER MAGAZINE June 1992 pages 212 - 223 'BACK TO REALITY'
- PC MAGAZINE vol. 11, no. 6 , 31 March 1992 pages 112 - 123 M.J. MILLER 'MULTIMEDIA'

## Description

Over the last few years it has become increasingly common to connect personal computers or workstations together into networks so that different machines can communicate with one another. A typical approach has been the introduction of local area networks (LANs) that provide file transfer and other facilities between computers. Other types of link, for example Integrated Services Digital Network (ISDN), are also known.

Modern networks can support the development of facilities such as video conferencing, in which a video image of a user captured at one terminal appears on the screen at a second terminal, and vice versa. A typical video conferencing terminal is a personal computer equipped with a video camera and an adapter card that allows video images to be displayed within a window on the screen of the personal computer. These adapter cards were often first designed for displaying video stored on compact disks, but have now been incorporated into video conferencing systems. The use of such adapter cards in multimedia applications is described in "Multimedia", p112-p123, PC Magazine, 31 March 92, "Back to Reality", p212-p223, Personal Computer Magazine, June 92, and in "Capturing Digital Video using DVI" in Dr Dobbs Journal, July 1992, p16-24.

The very high data rates required to store, display or transmit video signals have compelled various forms of data compression to be used in order to reduce the amount of processing required. Typically this compression is performed by special purpose hardware on the adapter capable of operating at the required high speed. There is no single standard form of data compression for video signals, so that different hardware adapters each use their own particular compression algorithms: a result of this is video compact disks are specific to a particular hardware adapter. This leads to a serious problem in video conferencing over heterogeneous networks, in which the workstations in the network are equipped with a variety of different types of hardware adapter. It is generally impossible for a compressed video signal produced by one type of adapter card and transmitted over the network to be decompressed and displayed at another workstation equipped with a different type of adapter card.

Accordingly, the invention provides a computer workstation including means for generating a video signal comprising a sequence of images, means for transmitting the video signal over a network to one or more other computer workstations, and further including:
a first video subsystem comprising means for processing the generated video signal into a first predetermined compressed format and for passing it to the video transmission means;
and characterised by
a second video subsystem comprising means for processing the generated video signal into a second predetermined format and for passing it to the video transmission means;
and means for selecting whether to transmit a video signal in the first or second predetermined format to any particular node in the network.

Thus the computer workstation is effectively equipped with two parallel video subsystems that can produce different video outputs for transmission over the network (based on the same basic video signal). The first video subsytem is typically hardware based, and produces a compressed signal that is specific to that hardware unit. This compressed format can then be transmitted over the network with relatively low bandwidth requirements, but it is only possible for terminals equipped with compatible hardware to display this signal. Thus the computer workstation also includes a second video subsystem, which is designed to produce a much simpler video signal. This subsystem is based on software, with no special purpose hardware. The signal produced by this subsystem will be either uncompressed, or use a relatively simple compression algorithm that can easily be implemented in software. This signal can then be transmitted to those displays at terminals that do not have hardware compatible with that at the transmitting workstation. The lesser degree of compression for the signal in the second predetermined format will of course result in a lesser frame rate, but nevertheless it has been found that an acceptable video signal can be transmitted. The means for selecting the video format to use can be a simple switch based on stored information: eg for a given terminal use data in a given format. Alternatively, in a dynamically configured network, the means for selecting can provide a method whereby to terminals can negotiate to select which video format is most appropriate to the transmission of a video signal between them.

Correspondingly, the invention also provides a computer workstation including means for receiving an incoming video signal comprising a sequence of images from a network, means for displaying the video signal, and further including:
a first video subsystem comprising means for processing a video signal received in a first predetermined compressed format and for passing it to the video display means;
and characterised by
a second video subsystem comprising means for processing a video signal received in a second predetermined format and for passing it to the video display means;
and wherein the receiving means includes means for forwarding the incoming video signal to the first or second video system.

Again, the computer workstation has first and second video subsystems, one of which will typically be based on specific hardware, such as a video adapter card, and one of which is software based. If the workstation is connected to a transmitting terminal with compatible hardware, then the workstation arranges for the video signal to be sent in the hardware-specific format for processing by the first video subsystem containing the appropriate hardware. However, if the receiving and transmitting workstations do not have compatible hardware, the data is sent in a second predetermined format. This format is much simpler, and the second video subsystem can be used to display this signal without the need for any specific hardware in the workstation. Again, the simpler video format used by the software unit will be lsess compressed than the hardware signal, and so either require greater bandwidth on the network, or else result in a lower frame rate.

In a preferred embodiment, the second predetermined format comprises representing the video signal as a series of bit maps, and the second video subsystem includes means for calling operating system routines to pass the bit maps to the video display means. Thus the second video subsystem requires no special hardware, but simply exploits the facilities already provided by the operating system of the workstation. The use of bit maps for the second predetermined format is a convenient and simple choice, but any format that allows easy compression/decompression by software could be used.

Of course, in general workstations will contain both the transmission and reception facilities described above, to allow them to fully participate in two-way video conferencing. Thus they will be capable both of transmitting a video signal in two (or more) different formats and of displaying an incoming video signal in two (or more) different formats. One of these formats will be a very simple software-processable format, such as a simple bit map, which will therefore act as a sort of lowest common denominator across the network to allow all the terminals to communicate with each other.

Preferably the video transmission means or the video receiving means is unaware whether said video signal is in the first or second predetermined format. In general the workstation will be running an application, which is responsible for transmitting or receiving the video signal. The fact that more than one video format is supported is therefore transparent to the application, which simply knows that a connection has been established with another terminal. This allows applications to be developed without having to know details about the video capture or display systems that are present at any given terminal.

The invention also provides a method for displaying a video signal comprising a sequence of images received from a network at a computer workstation including video display means, characterised by the steps of:
determining whether to forward the video signal to a first or second video subsystem, and forwarding a video signal in a first predetermined format to the first video subsystem, and forwarding a video signal in a second predetermined format to a second video subsystem;
processing the video signal at said first or second video subsystem; and forwarding the video signal from said first or second video subsystem to the video display means.

The invention further provides a method of processing and transmitting a video signal comprising a sequence of images from a computer workstation over a network to one or more other computer workstations, characterised by the steps of:
converting the video signal into a first or second predetermined format;
processing a video signal in the first predetermined format at a first video subsystem;
processing a video signal in the second predetermined format at a second video subsystem;
and passing the video signal from the first or second video subsystem to the video transmitting means.

An example of the invention will now be described by way of example with reference to the following drawings:
Figure 1 illustrates a heterogeneous video conferencing network;
Figure 2 illustrates a computer workstation with display and capture components in accordance with the invention; and
Figure 3 illustrates two computer workstations connected over a network.

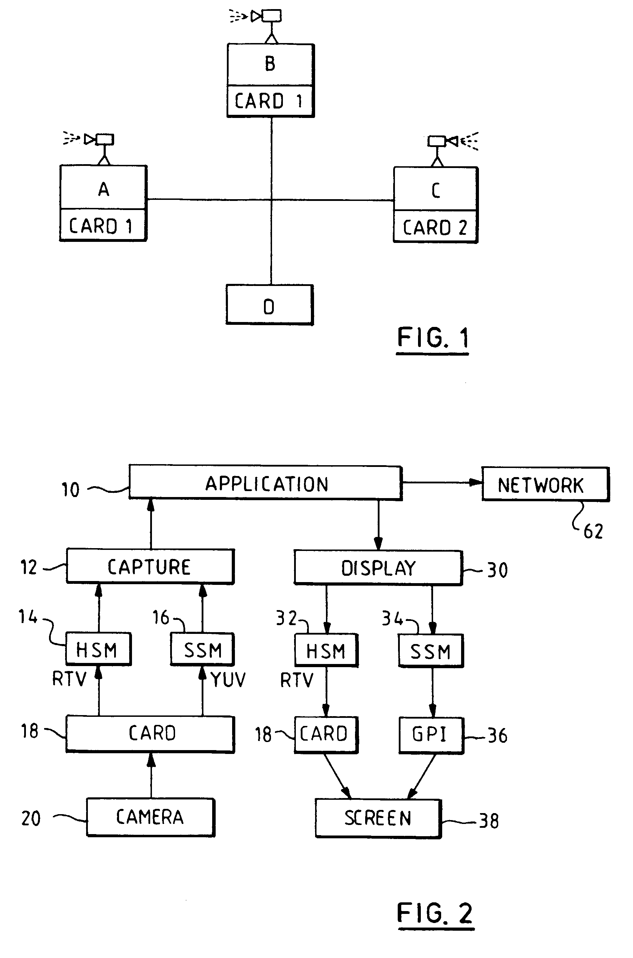

Figure 1 illustrates a typical video conference on a network of four terminals, A, B, C, D. Terminals A, B, C can each be regarded as a standard personal computer equipped with a suitable video adapter card, plus a camera. An example of such a video adapter card would be the IBM/Intel ActionMedia II card, which has a base card for displaying video in a predefined compressed format known as real-time video (RTV) in a window, and a daughter card to receive a video input (in this case from the camera) and convert it into RTV format. The ActionMedia II card is described in more detail in the ActionMedia II Technical Reference, part number 92F2729 from IBM. As illustrated, terminals A and B have compatible video hardware, whereas terminal C has a different adapter with its own data compression format. Terminal D has no specialist video equipment, and so cannot capture or display video signals in any hardware format. It should be appreciated that the connections shown in Figure 1 are schematic only, and do not necessarily represent the actual topology of the network.

The major components of a terminal equipped with an ActionMedia II video adapter card 18 are shown in Figure 2. Overall control of the computer resides in the application 10 which in turn is connected in parallel to a capture system and a display system. At the head of the capture system is the capture layer 12, which is responsible for feeding the application with video signals when requested. The video signal is passed to the application effectively as a straightforward data stream, which it then transmits over the network 62. The application does not know or care about the origin or format of the video signal, this being instead the concern of the capture layer.

For the terminal depicted in Figure 2, the video signal is obtained from a camera 20 pointing at the user, although it would also be possible to use another source, for example a video tape. This signal is then fed to the ActionMedia II adapter card 18. Two different output formats are obtained from the adapter card. The first is RTV, which is specific to the ActionMedia card and is a compressed version of the video signal. The second output from the card is taken in standard YUV format, where Y is a monochromatic intensity, and U and V carry the colour information. Two support modules, a hardware support module 14 and a software support module 16, are responsible for obtaining these frames in RTV and YUV format respectively. The software support module converts the YUV format frames into RGB (red-green-blue) format frames (bit maps). The frames are then passed to the capture layer, and through that to the application layer to be forwarded to another node on the network.

The software module sends the signal uncompressed, ie in bit map form, although some simple software compression technique could be used (the important factor is to be able to perform any decompression necessary at the receiving end without special purpose hardware). Clearly sending data in uncompressed format increases bandwidth requirements, resulting normally in a lower frame rate (assuming that the link between the transmitting and receiving nodes has a limited bandwidth). In practice, the software support module offers a variety of bit map forms (eg with different numbers of bits per pixel) and can arrange for a either a black and white or colour image to be sent (the former is derived from the Y-signal from the ActionMedia II card). Using monochrome bit maps has the advantage of reducing bandwidth, and so allows a faster frame rate to be used. The volume of data required to send an uncompressed monochromatic video signal is about four times that required for the hardware compressed RTV colour signal: for a colour uncompressed signal, the figure is some three times higher still. Although this can lead to quite slow frame rates, it has been found in practice that even a slow video display is regarded as definitely preferable to no video display at all.

The display system of the terminal of Figure 2 is headed by a display layer 30. The application receives a video signal over the network, which again is effectively just a data stream as far as the application is concerned. This data stream is then passed by the application to the display layer, which is responsible for forwarding the signal to an appropriate support module. The workstation of Figure 2 contains two display support modules, a hardware support module 32 and a software support module 34. The former directs an incoming video signal in RTV format to the ActionMedia II adapter card 18, for display in the conventional manner (the ActionMedia card 18 is depicted twice in Figure 2, once on the capture side and once on the display side, although in reality the workstation contains just a single card which performs both capture and display). Alternatively, if the incoming video signal is not in RTV format, but in software format instead, the software support module displays each frame of the video signal as a bit map. This is done by making a series of calls to the operating system, which will result in a succession of bit maps appearing in the appropriate window on the screen. For the OS/2 operating system, graphical programming interface 36 (GPI) calls are used - in particular, a succession of GpiBitBlt calls (see eg OS/2 Presentation Manager GPI, by Winn, van Nostrand Rheinhold, 1991 for more details about the GPI in OS/2). Thus the software support module allows some form of video signal to be displayed, even in the absence of a video adapter card.

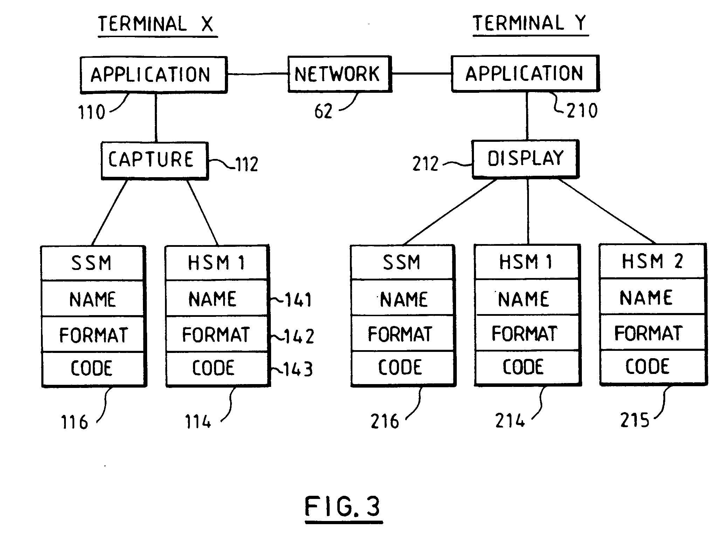

Figure 3 illustrates two terminals X and Y connected by the network 62. Each terminal has a plurality of support modules: the capture side of terminal X contains one software support module (SSM) 116, and one hardware support module (HSM1) 114, whilst the display side of terminal Y contains one SSM 216 and two hardware support modules (HSM1 and HSM2) 214, 215. Each support module contains a name 141, format information 142, and code 143. The name allows that format to be identified, for example as ActionMedia II RTV, whilst the format information contains data such as the maximum frame rate, frame dimensions and so on for that format. The code performs the actual display or capture of video signals in that format, so that the hardware support module capture code for an ActionMedia II would be able to access the card and extract the RTV signal.

When it is desired to send a video signal from terminal X to terminal Y, the capture layer of terminal X sends to the display layer of terminal Y the names 141 of the video formats that it supports. The display system then matches these against its own supported formats, to identify any formats in common. If the two systems share more than one format, then the format can be chosen according to various criteria (eg lowest bandwidth requirements), or possibly the application can be made to prompt the user for a selection. The display system then returns a message to the capture layer indicating the format to be used.

Once a format has been agreed upon, then code associated with the relevant support module is activated at each module. Thus for example, if HSM1 corresponds to Actionmedia II RTV format for both terminal X and terminal Y so that this becomes the agreed format, the RTV support modules will be activated in each terminal. Terminal X will then begin transmitting in RTV format to terminal Y. On the other hand, if no match of hardware formats is obtained, for example terminal X contains an ActionMedia II card but terminal Y has incompatible hardware, then it is necessary to use the software support module.

Returning to Figure 1 therefore, it is assumed that each terminal in the network includes a common software support module. These software support modules do not have to be identical in every terminal, but rather they must all be compatible in that each one can send or receive data in the same format. Thus for example the bit maps may be transmitted in the form appropriate to display at a terminal running the OS/2 operating system, but the software module at a terminal running a different operating system (eg UNIX) must be able to convert into a format appropriate for that terminal. Furthermore, each terminal must include the software to support the negotiation and selection of a format. In general this level of software compatibility is relatively easy to arrange compared to ensuring uniformity of hardware, since it is much simpler for users to install new software at their terminal then it is for them to replace existing hardware.

In addition to the common software support module, nodes A and B in Figure 1 contain the hardware support modules appropriate to card 1, node C contains the hardware support modules appropriate to card 2, whilst node D contains no hardware support modules. It can be seen that only for communications between A and B can the video signal be sent in the hardware compressed format: for all other combinations, it is necessary to use the software only format.

Computer workstations without any video adapter cards or other specific hardware also have the ability to participate in a video conference. Thus terminal D is unable to generate its own video signal, but can transmit instead a stationary bit map (ie its software module simply reads in a bit map which it then passes to the application for transmission). Nevertheless, the display software support module of terminal D is able to receive data in software-processable form, so that it can use standard hardware and operating system routines to display the video signal. Similarly, if terminal B did not have a camera, then although it would be able to display incoming video signals in the hardware format specific to card 1, it would not be able to capture its own video signal, and so would have to utilise the software support module to transmit its own bit map.

In the network of Figure 1, a terminal is likely to be simultaneously communicating with more than one other terminal in the network. For example, terminal B could be receiving video signals from both terminals A and C at the same time (in different formats). It is clearly necessary therefore for the sender of each incoming video signal to be identifiable at B, so that B can forward the incoming signal to the support module selected for that sender. This is handled by the normal data communications process for sending messages between nodes.

## Claims

1. A computer workstation including means (20) for generating a video signal comprising a sequence of images, means for transmitting the video signal over a network to one or more other computer workstations, and further including:
a first video subsystem (14, 18) comprising means for processing the generated video signal into a first predetermined compressed format and for passing it to the video transmission means;
and characterised by
a second video subsystem (16) comprising means for processing the generated video signal into a second predetermined format and for passing it to the video transmission means;
and means for selecting (10) whether to transmit a video signal in the first or second predetermined format to any particular node in the network.

2. The computer workstation of claim 1, wherein said video signal is transmitted in said first predetermined compressed format over the network to a first other computer workstation, and said video signal is also transmitted in said second predetermined format to a second other computer in the network.

3. A computer workstation including means for receiving an incoming video signal comprising a sequence of images from a network, means (38) for displaying the video signal, and further including:
a first video subsystem (32, 18) comprising means for processing a video signal received in a first predetermined compressed format and for passing it to the video display means;
and characterised by
a second video subsystem (34) comprising means for processing a video signal received in a second predetermined format and for passing it to the video display means;
and wherein the receiving means includes means for forwarding the incoming video signal to the first or second video system.

4. The computer workstation of claim 3, including means for simultaneously receiving first and second video signals over the network, each comprising a sequence of images, and means for displaying said first and second video signals, wherein the receiving means forwards the first video signal to said first video subsystem, and said second video signal to said second video subsystem.

5. The computer workstation of any preceding claim, wherein said second predetermined format comprises representing the video signal as a series of bit maps.

6. The computer workstation of claim 3 or 4, wherein said second predetermined format comprises representing the video signal as a series of bit maps, and the second video subsystem includes means for calling operating system routines to pass the bit maps to the video display means.

7. The computer workstation of any preceding claim, wherein the first video subsystem includes a video adapter card.

8. The computer workstation of any preceding claim, wherein the video transmission means or video receiving means is unaware whether said video signal is in the first or second predetermined format.

9. The computer workstation of any preceding claim, wherein the second video subsystem processes said video signal in software without special purpose hardware.

10. A method for displaying a video signal comprising a sequence of images received from a network at a computer workstation including video display means, characterised by the steps of:
determining whether to forward the video signal to a first or second video subsystem, and forwarding a video signal in a first predetermined format to the first video subsystem, and forwarding a video signal in a second predetermined format to a second video subsystem;
processing the video signal at said first or second video subsystem; and forwarding the video signal from said first or second video subsystem to the video display means.

11. A method for displaying at a computer workstation first and second video signals, each comprising a sequence of images, received respectively from first and second nodes in a network, the computer workstation including video display means, the method being characterised by the steps of:
forwarding the first video signal in a first predetermined format to a first video subsystem;
forwarding the second video signal in a second predetermined format to a second video subsystem,
processing the first and second video signals at said respective first and second video subsystems; and
forwarding the first and second video signals from said respective first and second video subsystems to the video display means.

12. The method of claim 10 or 11, wherein the second predetermined format comprises representing the video signal as a series of bit maps, and the step of forwarding the video signal in the second predetermined format to the video display means comprises calling operating system routines to display said series of bit maps.

13. A method of processing and transmitting a video signal comprising a sequence of images from a computer workstation over a network to one or more other computer workstations, characterised by the steps of:
converting the video signal into a first or second predetermined format;
processing a video signal in the first predetermined format at a first video subsystem;
processing a video signal in the second predetermined format at a second video subsystem;
and passing the video signal from the first or second video subsystem to the video transmitting means.

14. A method of processing and transmitting a video signal comprising a sequence of images from a computer workstation over a network to first and second other computer workstations, characterised by the steps of:
converting the video signal into first and second video signal in first and second predetermined formats respectively;
processing said first video signal in the first predetermined format at a first video subsystem;
processing said second video signal in the second predetermined format at a second video subsystem;
and passing the first and second video signals from the first and second video subsystems to the video transmitting means, for transmission over said network to said first and second other computer workstations respectively.

15. The method of any of claims 10 to 14, wherein the first video subsystem includes a video adapter card.

16. The method of any of claims 10 to 15, wherein the second video subsystem processes said video signal in software without special purpose hardware.

17. The method of any of claims 10 to 16, further comprising the initial step of a computer workstation which is to transmit a video signal, and a computer workstation which is to receive said video signal, agreeing on the format to be used for said video signal.

## Patentansprüche

1. Eine Computerarbeitsstation mit einem Mittel 20 zur Erzeugung eines aus einer Folge von Bildern bestehenden Videosignals, einem Mittel zur Übertragung des Videosignals über ein Netzwerk an eine oder mehrere andere Computerarbeitsstationen und mit
einem ersten Videosubsystem 14, 18 mit Mitteln zur Verarbeitung des generierten Videosignals in ein vorgegebenes komprimiertes Format und zur Übergabe des generierten Videosignals an das Videoübertragungsmittel;
gekennzeichnet durch
ein zweites Videosubsystem 16 mit Mitteln zur Verarbeitung des generierten Videosignals in ein zweites vorgegebenes Format und zur Übergabe des generierten Videosignals an das Videoübertragungsmittel;
und Mittel 10 zum Auswählen, ob ein Videosignal im ersten oder im zweiten vorgegebenen Format an einen bestimmten Knoten im Netzwerk übertragen werden soll.

2. Eine Computerarbeitsstation gemäß Anspruch 1, bei der das Videosignal in einem ersten vorgegebenen komprimierten Format über ein Netzwerk an eine erste andere Computerarbeitsstation und außerdem im zweiten vorgegebenen Format an einen zweiten anderen Computer im Netzwerk übertragen wird.

3. Eine Computerarbeitsstation mit Mitteln zum Empfangen eines aus einer Folge von Bildern bestehenden ankommenden Videosignals von einem Netzwerk, Mitteln 38 zum Anzeigen des Videosignals, und außerdem
einem ersten Videosubsystem 32, 18 mit Mitteln zur Verarbeitung eines im ersten vorgegebenen komprimierten Format empfangenen Videosignals und zur Übergabe dieses Signals an das Videoübertragungsmittel;
gekennzeichnet durch
ein zweites Videosubsystem 34 mit Mitteln zur Verarbeitung eines in einem zweiten vorgegebenen Format empfangenen Videosignals und zur Übergabe dieses Signals an das Videoübertragungsmittel;
wobei das Empfangsmittel ein Mittel zur Weiterleitung des ankommenden Videosignals an das erste oder zweite Videosubsystem enthält.

4. Eine Computerarbeitsstation gemäß Anspruch 3, die Mittel zum gleichzeitigen Empfang des ersten und zweiten aus einer Folge von Bildern bestehenden Videosignals über das Netzwerk und Mittel zum Anzeigen des ersten und zweiten Videosignals besitzt, wobei das Empfangsmittel das erste Videosignal an das erste Videosubsystem und das zweite Videosignal an das zweite Videosubsystem weiterleitet.

5. Eine Computerarbeitsstation gemäß Anspruch 1 bis 4, bei der im zweiten vorgegebenen Format das Videosignal als Folge von Bitmaps dargestellt wird.

6. Eine Computerarbeitsstation gemäß Anspruch 3 oder 4, bei der im zweiten vorgegebenen Format das Videosignal als Folge von Bitmaps dargestellt wird und das zweite Videosubsystem Mittel zum Aufrufen von Betriebssystemroutinen besitzt, um die Bitmaps an das Videoanzeigemittel zu übergeben.

7. Eine Computerarbeitsstation gemäß Anspruch 1 bis 6, bei der das erste Videosubsystem eine Videoadapterkarte enthält.

8. Eine Computerarbeitsstation gemäß Anspruch 1 bis 7, bei der das Videoübertragungsmittel oder das Videoempfangsmittel nicht feststellt, ob das Videosignal im ersten oder im zweiten vorgegebenen Format vorliegt.

9. Eine Computerarbeitsstation gemäß Anspruch 1 bis 8, bei der im zweiten Videosubsystem das Videosignal von der Software verarbeitet wird, ohne daß eine spezielle Hardware für diesen Zweck vorhanden ist.

10. Ein durch folgende Schritte gekennzeichnetes Verfahren zum Anzeigen eines aus einer Folge von Bildern bestehenden Videosignals, das an einer Computerarbeitsstation mit einem Videoanzeigemittel über ein Netzwerk empfangen wurde:
Feststellen, ob das Videosignal an ein erstes oder ein zweites Videosubsystem übertragen werden soll, und Übertragung eines Videosignals in einem ersten vorgegebenen Format an das erste Videosubsystem und in einem zweiten vorgegebenen Format an das zweite Videosubsystem;
Verarbeitung des Videosignals im ersten oder zweiten Videosubsystem und Übertragung des Videosignals vom ersten oder zweiten Videosubsystem an das Videoanzeigemittel.

11. Ein durch folgende Schritte gekennzeichnetes Verfahren zum Anzeigen eines ersten und eines zweiten aus einer Folge von Bildern bestehenden Videosignals, das von einem ersten und einem zweiten Knoten in einem Netzwerk empfangen wurde, auf einer Computerarbeitsstation mit einem Videoanzeigemittel:
Übertragung des ersten Videosignals in einem ersten vorgegebenen Format an ein erstes Videosubsystem;
Übertragung des zweiten Videosignals in einem zweiten vorgegebenen Format an ein zweites Videosubsystem;
Verarbeitung des ersten und des zweiten Videosignals im ersten und im zweiten Videosubsystem; und
Übertragung des ersten und des zweiten Videosignals vom ersten und vom zweiten Videosubsystem an das Videoanzeigemittel.

12. Ein Verfahren gemäß Anspruch 10 oder 11, bei dem im zweiten vorgegebenen Format das Videosignal als Folge von Bitmaps dargestellt wird und in dem Schritt, in dem das Videosignal im zweiten vorgegebenen Format an das Videoanzeigemittel übertragen wird, Betriebssystemroutinen aufgerufen werden, um die Folge von Bitmaps anzuzeigen.

13. Ein durch folgende Schritte gekennzeichnetes Verfahren zur Verarbeitung und Übertragung eines aus einer Folge von Bildern bestehenden Videosignals von einer Computerarbeitsstation über ein Netzwerk an eine oder mehrere anderen Computerarbeitsstationen:
Umwandlung des Videosignals in ein erstes oder zweites vorgegebenes Format;
Verarbeitung eines Videosignals im ersten vorgegebenen Format in einem ersten Videosubsystem;
Verarbeitung eines Videosignals im zweiten vorgegebenen Format in einem zweiten Videosubsystem;
und Übertragung des Videosignals vom ersten oder zweiten Videosubsystem an das Videoanzeigemittel.

14. Ein durch folgende Schritte gekennzeichnetes Verfahren zur Verarbeitung und Übertragung eines aus einer Folge von Bildern bestehenden Videosignals von einer Computerarbeitsstation über ein Netzwerk an eine erste und eine zweite andere Computerarbeitsstation:
Umwandlung des Videosignals in ein erstes und ein zweites Videosignal im ersten bzw. im zweiten vorgegebenen Format;
Verarbeitung des ersten Videosignals im ersten vorgegebenen Format in einem ersten Videosubsystem;
Verarbeitung des zweiten Videosignals im zweiten vorgegebenen Format in einem zweiten Videosubsystem;
und Übertragung des ersten und des zweiten Videosignals vom ersten und zweiten Videosubsystem an das Videoübertragungsmittel zur Übertragung an die erste und die zweite Computerarbeitsstation über das Netzwerk.

15. Ein Verfahren gemäß Anspruch 10 bis 14, bei dem das erste Videosubsystem eine Videoadapterkarte besitzt.

16. Ein Verfahren gemäß Anspruch 10 bis 15, bei dem das zweite Videosubsystem das Videosignal ohne spezielle Hardware durch die Software verarbeitet.

17. Ein Verfahren gemäß Anspruch 10 bis 16, das außerdem einen ersten Schritt enthält, in dem eine Computerarbeitsstation, von der ein Videosignal gesendet wird, und eine Computerarbeitsstation, die das Videosignal empfängt, sich über das für das Videosignal zu verwendende Format einigen.

## Revendications

1. Station de travail informatique comprenant un moyen (20) pour générer un signal vidéo comprenant une séquence d'images, un moyen pour transmettre le signal vidéo sur un réseau vers une ou plusieurs stations de travail informatique, et comprenant de plus :
un premier sous-système vidéo (14, 18) comprenant un moyen pour traiter le signal vidéo généré dans un premier format compressé prédéterminé et pour le passer au moyen de transmission vidéo ;
et caractérisée par
un second sous-système vidéo (16) comprenant un moyen pour traiter le signal vidéo généré dans un second format prédéterminé et pour le passer au moyen de transmission vidéo ;
et un moyen pour sélectionner (10) le fait de transmettre un signal vidéo dans le premier ou le second format prédéterminé à tout noeud particulier dans le réseau.

2. Station de travail informatique selon la revendication 1, dans laquelle ledit signal vidéo est transmis dans ledit premier format compressé prédéterminé sur le réseau à une première autre station de travail informatique, et ledit signal vidéo est également transmis dans ledit second format prédéterminé à un second autre ordinateur dans le réseau.

3. Station de travail informatique comprenant un moyen pour recevoir un signal vidéo entrant comprenant une séquence d'images provenant du réseau, un moyen (38) pour afficher le signal vidéo, et comprenant de plus :
un premier sous-système vidéo (32, 18) comprenant un moyen pour traiter un signal vidéo recu dans un premier format compressé prédéterminé et pour le passer au moyen d'affichage vidéo ;
et caractérisée par
un second sous-système vidéo (34) comprenant un moyen pour traiter un signal vidéo reçu dans un second format prédéterminé et pour le passer au moyen d'affichage vidéo ;
et dans laquelle le moyen de réception comprend un moyen pour diriger le signal vidéo entrant vers le premier ou le second système vidéo.

4. Station de travail informatique selon la revendication 3, comprenant un moyen pour recevoir simultanément des premier et second signaux vidéo sur le réseau, chacun comprenant une séquence d'images et un moyen pour afficher lesdits premier et second signaux vidéo, dans laquelle le moyen de réception dirige le premier signal vidéo vers le premier sous-système vidéo et ledit second signal vidéo vers ledit second sous-système vidéo.

5. Station de travail informatique selon l'une quelconque des revendications précédentes, dans laquelle ledit second format prédéterminé comprend la représentation du signal vidéo comme une série de graphiques en mode point.

6. Station de travail informatique selon la revendication 3 ou 4, dans laquelle ledit second format prédéterminé comprend la représentation du signal vidéo comme une série de graphiques en mode point et le second sous-système vidéo comprend un moyen pour appeler des programmes du système d'exploitation pour passer les graphiques en mode point au moyen d'affichage vidéo.

7. Station de travail informatique selon l'une quelconque des revendications précédentes, dans laquelle le premier sous-système vidéo comprend une carte adaptateur vidéo.

8. Station de travail informatique selon l'une quelconque des revendications précédentes, dans laquelle le moyen de transmission vidéo ou le moyen de réception vidéo est transparent au fait que ledit signal vidéo soit dans le premier ou le second format prédéterminé.

9. Station de travail informatique selon l'une quelconque des revendications précédentes, dans laquelle le second sous-système vidéo traite ledit signal vidéo par logiciel sans circuits spéciaux.

10. Procédé pour afficher un signal vidéo comprenant une séquence d'images reçues à partir d'un réseau à une station de travail informatique comprenant un moyen d'affichage vidéo, caractérisé par les étapes consistant à :
déterminer le fait de diriger le signal vidéo vers un premier ou un second sous-système vidéo et diriger un signal vidéo dans un premier format prédéterminé vers le premier sous-système vidéo et diriger un signal vidéo dans un second format prédéterminé vers un second sous-système vidéo ;
traiter le signal vidéo audit premier sous-système vidéo ou second sous-système vidéo et diriger le signal vidéo provenant dudit premier sous-système vidéo ou dudit second sous-système vidéo vers le moyen d'affichage vidéo.

11. Procédé pour afficher à une station de travail informatique des premier et second signaux vidéo, chacun comprenant une séquence d'images, recues respectivement de premier et second noeuds dans un réseau, la station de travail informatique comprenant un moyen d'affichage vidéo, le procédé étant caractérisé par les étapes consistant à :
diriger le premier signal vidéo dans un premier format prédéterminé vers un premier sous-système vidéo ;
diriger le second signal vidéo dans un second format prédéterminé vers un second sous-système vidéo ;
traiter les premier et second signaux vidéo auxdits premier et second sous-systèmes vidéo respectifs ; et
diriger les premier et second signaux vidéo provenant desdits premier et second sous-systèmes vidéo respectifs vers le moyen d'affichage vidéo.

12. Procédé selon la revendication 10 ou 11, dans lequel le second format prédéterminé comprend la représentation du signal vidéo comme une série de graphiques en mode point, et l'étape consistant à diriger le signal vidéo dans le second format prédéterminé vers le moyen d'affichage vidéo comprend l'appel des programmes du système d'exploitation pour afficher ladite série de graphiques en mode point.

13. Procédé de traitement et de transmission d'un signal vidéo comprenant une séquence d'images en provenance d'une station de travail informatique sur un réseau vers une ou plusieurs autres stations de travail informatique, caractérisé par les étapes consistant à :
convertir le signal vidéo en un premier ou un second format prédéterminé ;
traiter un signal vidéo dans le premier format prédéterminé à un premier sous-système vidéo ;
traiter un signal vidéo dans le second format prédéterminé à un second sous-système vidéo ;
et passer le signal vidéo provenant du premier sous-système vidéo ou du second sous-système vidéo au moyen de transmission vidéo.

14. Procédé de traitement et de transmission d'un signal vidéo comprenant une séquence d'images provenant d'une station de travail informatique sur un réseau vers des première et seconde autres stations de travail informatique, caractérisé par les étapes consistant à :
convertir le signal vidéo en premier et second signaux vidéo dans des premier et second formats prédéterminés respectivement ;
traiter ledit premier signal vidéo dans le premier format prédéterminé à un premier sous-système vidéo ;
traiter le second signal vidéo dans le second format prédéterminé à un second sous-système vidéo ;
et passer les premier et second signaux vidéo provenant des premier et second sous-systèmes vidéo au moyen de transmission vidéo pour transmission sur ledit réseau vers lesdites première et seconde autres stations de travail informatique, respectivement.

15. Procédé selon l'une quelconque des revendications 10 à 14, dans lequel ledit premier sous-système vidéo comprend une carte adaptateur vidéo.

16. Procédé selon l'une quelconque des revendications 10 à 15, dans lequel le second sous-système vidéo traite ledit signal vidéo par logiciel sans circuits spéciaux.

17. Procédé selon l'une quelconque des revendications 10 à 16, comprenant de plus l'étape initiale à une station de travail informatique qui doit transmettre un signal vidéo et à une station de travail informatique qui doit recevoir ledit signal vidéo, à être d'accord sur le format qui doit être utilisé pour ledit signal vidéo.
